# EUROPEAN PATENT APPLICATION

(11) **EP 1 615 125 A1**
(43) Date of publication of application: **11.01.2006**
(21) Application number: 05102938.7
(22) Date of filing: 14.04.2005
(51) Int. Cl.: G06F 9/44

(54) **Automatic source code generation**

(71) Applicant: Agilent Technologies, Inc., Palo Alto, CA 94306 (US)
(72) Inventor: STEMER, Peter, 76337, Waldbronn (DE); PRASSE, Klaus, Karlsruhe, 76137 (DE); ANDERER, Herbert, 76337, Waldbronn (DE)
(74) Representative: Barth, Daniel Mathias

(57) **Abstract**

A data processing device (100) comprising a first generation unit (105) for generating, based on generic data defining a functional interface of an apparatus in general terms, a formalized description of the functional interface of the apparatus, and a second generation unit (105) for generating, based on the formalized description, source code for realizing the functional interface of the apparatus.

## Description

### BACKGROUND ART

The present invention relates to automatic source code generation.

When a new laboratory apparatus, for instance a fluid separation system or a biochemical analysis device, is being developed, source code has to be developed by a human programmer. After a compilation of the source code, it can be executed in the developed apparatus for providing and controlling the functionality of the apparatus. Apart from this, a user manual is written describing the functionality and the instruction interface of the apparatus. With the help of such a user manual, a human user is enabled to operate the apparatus or to adjust the apparatus to her or his preferences.

### DISCLOSURE OF THE INVENTION

It is an object of the invention to provide an improved data processing. The object may be solved by the independent claims. Exemplary embodiments are shown by the dependent claims.

According to an exemplary embodiment of the present invention, a data processing device is provided comprising a first generation unit for generating, based on generic data defining a functional interface (or a functionality) of an apparatus in general terms, a formalized description of the functional interface (or the functionality) of the apparatus, and a second generation unit for generating, based on the formalized description, source code for realizing the functional interface (or the functionality) of the apparatus. Optionally, a third generation unit may be provided for generating interface documentation out of the formalized description.

According to another exemplary embodiment of the present invention, an apparatus for providing a functional interface (or a functionality) is provided, wherein the apparatus comprises a formalized description of the functional interface (or the functionality), and wherein the formalized description is generated based on generic data defining the functional interface (or the functionality) of the apparatus in general terms.

According to still another exemplary embodiment of the present invention, a method of processing data is provided, the method comprising the steps of generating, based on generic data defining a functional interface (or a functionality) of an apparatus in general terms, a formalized description of the functional interface (or the functionality) of the apparatus, and generating, based on the formalized description, source code for realizing the functional interface (or the functionality) of the apparatus.

According to yet another exemplary embodiment of the present invention, a computer-readable medium is provided, in which a computer program of processing data is stored, which computer program, when being executed by a processor, is adapted to control or carry out the above-mentioned method steps.

According to still another exemplary embodiment of the present invention, a program element of processing data is provided, which program element, when being executed by a processor, is adapted to control or carry out the above-mentioned method steps.

Embodiments of the invention can be partly or entirely embodied or supported by one or more suitable software programs, which can be stored on or otherwise provided by any kind of data carrier, and which might be executed in or by any suitable data processing unit. The data processing scheme according to the invention can be realized by a computer program, i.e. by software, or by using one or more special electronic optimization circuits, i.e. in hardware, or in hybrid form, i.e. by means of software components and hardware components.

One exemplary aspect of the invention can be seen in the fact that, for assisting in the development of an apparatus like a laboratory apparatus, it is sufficient that a human being inputs generic data defining the functionality of the apparatus, particularly defining a functional interface of the apparatus, to be designed in general terms, that is to say in a verbal but in some sense formalized manner according to a syntax understandable for a human being or close to a human language. The data processing system according to an embodiment of the invention may then automatically generate a (more or further) formalized description of the functionality of this apparatus. This formalized description may be a formulation of the desired functionality of the apparatus and may provide instructions in a symbolic logic to be readable by a machine to be a proper basis for generating source code for realizing the functionality of the apparatus. Such automatically generated source code, after being compiled, may be executed in the apparatus to be developed and may then serve to control or provide the functionality of the apparatus.

According to one aspect of the invention, a means for automated creation of source code and/or corresponding documentation from a formalized lab device interface description may be provided.

According to an aspect of the invention, the generated source code may define the interface of the apparatus to be developed, that is to say all functions of the apparatus which may be accessed via the functional interface.

In other words, when developing a new apparatus, it is made possible by the data processing scheme according to an embodiment of the invention that an engineer just defines an entire set of functions of the apparatus (e.g. commands, events, parameters, etc.) accessible via a functional interface in a language according to a unique syntax relatively close to a human language with which the engineer is familiar, for instance via a GUI (graphical user interface) based template on a computer monitor. The system according to an embodiment of the invention is then capable to translate or transfer this code in a more formalized representation. Such a more formalized representation can be, for instance, XML (Extensible Markup Language). This code may be independent from a special kind of language used by the human user.

Such a formalized description, for instance in the form of an XML file, may then be used according to an embodiment of the invention for generating computer-readable program source code which is, after compilation and when being executed by a processor, capable of realizing the entire functional interface of the apparatus to then readily developed. Thus, source code may be generated in accordance with the generic data and may be generated automatically after having specified the desired functionality in general terms. Consequently, a programmer never has to touch the automatically generated source code, which in turn eliminates the problem that implementation and documentation may differ.. The described scheme according to an embodiment of the invention may thus allow designing any apparatus, for instance a laboratory apparatus, in a significantly simplified manner, faster and cheaper. Generated source code may be implemented in the apparatus without the necessity that a human programmer has to review the code.

In a scenario in which only one or some particular functions of an already developed apparatus shall be modified for developing a similar but functionally modified apparatus, it is easily possible to just "reload" the interface description in the formalized language to the data processing device according to an embodiment of the invention so that it is not necessary to program everything again from the very beginning. It may be sufficient to selectively modify one or more parameters related to a function to be modified. Then, it may be sufficient to just press some kind of "Generate Code" button on a screen or a keypad to instruct the system to generate the updated or modified source code. Moreover, retrofitting of particular functions to an already existing apparatus can be performed easily.

The term "generic data defining a functionality of an apparatus in general terms" may particularly denote the opportunity to provide the system with data in a language in which the desired functionality may be articulated by a human being. Thus, the information defining the desired functionality can be verbalized in a manner with which a human user is familiar. For instance, such generic data defining the functionality of an apparatus in general terms may be "the device shall include a command which initiates the mixing of a first liquid having a first concentration with a second liquid having a second concentration". This non-formalized description maybe input by a user via a given data input structure. For instance, this information may be input in a structured manner via a mask with data input fields in which the different pieces of information are insertable by a human user. This can, for instance, be realized with a graphical user interface on which computer windows are visualized allowing a user to input the generic data. In other words, a system according to an embodiment of the invention may provide a user with a communication interface which may allow the user to enter the data without the necessity that the user cares about the question if the input data can be read by a machine.

The input fields of such a generic data inputting means may then be coupled, combined or linked according to a complex data connection structure (which is usually invisible for a human user) which may process the data in a manner as to generate a code which is a formalized description.

The term "formalized description" may particularly denote a description in a language which can be read or interpreted by a machine or an algorithm without the interference of human intelligence. The formalized or logical description may be any program code encoding the functionality of the apparatus in a format that needs not to be understood by a human being.

According to an exemplary embodiment of the invention, the formalized description of the functionality (for instance in the form of an XML-file) can be stored in the produced apparatus, wherein it may be possible to be accessed from an external device. This XML-file provides a formal description of all functions, which may be realized with the apparatus.

A developer may simply specify which functions an apparatus to be designed shall provide. This group of functions may then be transferred in a formalized description like an XML-file, particularly in an automatic manner. From this formalized description, a header for firmware, that is to say compilable source code, may be generated which may include all information necessary for the interface of the apparatus to be designed. For generating the source code, the system may optionally access a program library containing particularly standard routines, which may be used by the machine to generate source code in a short time.

Optionally, the formalized description may not only be used as a basis for generating the source code, but may also be used as a basis for generating a documentation or manual for a user, for instance as an HTML file, a Word file or an PDF file.

Thus, it may be prevented that the documentation of a device's instruction interface and its actual implementation differ. The developer (for good reasons) often changes some instructions or parameters but forgets to consistently update the documentation. This results in incompatibilities with controlling software and confusion for the user. Such incompatibilities may be securely avoided by the described aspect of the invention.

Since it may be made possible according to the invention to generate, from one and the same formalized description and in an automatic manner, source code on the one hand and a documentation readable by a human user on the other hand, it may be guaranteed that the documentation delivered to a customer coincides with the functionality actually provided by the apparatus. In other words, documentation and source code are conform with high reliability.

Further, it may be dispensible that a developer has to manually write a documentation. Instead of this, the documentation may be generated automatically, since all information necessary for this purpose is derivable from the generic data and thus also from the formalized description. Therefore, a perfect conformity between documentation and source code may be achieved.

According to an exemplary embodiment of the invention, it may be possible to generate at least two different documentation files according to at least one predetermined parameter. For instance, a documentation generated for a customer may be different from a documentation generated for the employees of a company developing the apparatus. For example, a documentation accessible for the employees of the company developing the apparatus may contain confidential information which may not be accessible in the documentation for the customers. Thus, any item of the input generic information may be assigned with a flag or the like indicating that a particular piece of information may be confidential. However, distinguishing between confidential and non-confidential data is not the only possible criteria for deciding which information should be included in which type of documentation. Another exemplary criteria for distinguishing which information should be included in which type of documentation is the importance of a particular piece of information. Thus, it may be possible to generate a brief summary documentation of the functionality including only information classified as particularly important, and to generate a detailed documentation of the entire functionality including all information regardless its importance.

Furthermore, when extending or modifying the functionality of an apparatus to be designed, it may be no more necessary to review and rewrite the entire documentation again, but it may be sufficient that the generic data or the formalized description is only punctiformly modified. Then, a "Generate" button may be pressed for generating both modified documentation and modified source code.

Thus, the functionality of the apparatus to be designed may be extendable in a simple manner, and it may be ensured that an automatically generated manual fits to the specification of the device according to the source code.

Thus, according to one aspect of the invention, a set of commands for an apparatus to be developed (e.g. functions, parameters, events) may be defined by a developer and described in a colloquial language or common speech. From this generic data formulated in general terms, a formalized description of the desired set of commands may be generated, for instance in XML, using a data connection structure for processing and evaluating the different generic data items. From this formalized description, source code for firmware may be generated. Simultaneously, the formalized description can be used as a basis for generating a user manual in an automated manner. Thus, discrepancies between documentation and control code may be securely avoided. The term "common speech" may particularly denote a language which is in some sense formal (since it may be restricted by particular rules), but which may still be understood by a (skilled) human user. Further, the term "common speech" may particularly denote an unambiguous syntax which is close to human speech.

An example for a command which may be input as generic data is "COMP [%B], [%C], [%D]". "COMP" may a keyword for a particular function. The three items "[%B]", "[%C]", and "[%D]" may be parameters for specifying the function in more detail. The keyword COMP may define the functionality of a pump for treating four liquid components A, B, C, D which shall be mixed according to preset percentages %B, %C, %D, wherein the percentage of component A results from the frame condition that the sum of A, B, C, and D should be 100%. Based on such generic data like "COMP [%B], [%C], [%D]", corresponding source code may be generated automatically, which can be executed by the apparatus to be developed.Another example for a piece of functionality to be defined in a common speech is "EV 0560". This may define that the apparatus to be designed provides as an output that a particular event has happened, for instance "Analysis Completed" when an entire analysis procedure has been carried out successfully.

For instance, by simply pressing a button, the data structure input by the human user may be connected and processed automatically so that an XML file will be generated. The translation into the XML file may be performed by a particular software element. This software element connects the different items of plaintext. In other words, the data related to the input fields in the user interface may be linked in such a manner that the XML file or any other formalized description is automatically generated.

The Extensible Markup Language (XML) may be considered as a simplified subset of SGML, capable of describing many different kinds of data. A purpose is to facilitate the sharing of structured text and information. Languages based on XML (for example RDF, RSS, MathML, XSIL and SVG) are themselves described in a formal way, allowing programs to modify and validate documents in these languages without prior knowledge of their form.

Such an XML file may be processed using a Stylesheet. A Stylesheet may be used in order to separate the form of a description from the content of a structured document (for instance XML). Stylesheets may allow to interpret contents in dependence of an output device. For this purpose, the content does not have to be changed. Examples for Stylesheet languages are CSS, XSL and DSSSL. Source code readable by a computer may be generated based on the XML file. Such a source code may be, for instance, C++ code.

Furthermore, a Stylesheet may be used in combination with the XML file to automatically generate the manual which may be directly readable by a human user. Such a documentation may be a HTML file or a PDF file.

In this specification, the term "functionality" may particularly denote one or more functional items which an apparatus to be defined may service or provide, or an instruction repertoire. It may also denote the entirety of all functions which the apparatus offers. "Functionality" may include commands which the apparatus understands and which the apparatus may carry out. "Functionality" may include actions which the apparatus may perform by itself, without external control or trigger, for instance the indication of a particular operation state.

In the following, further exemplary embodiments of the data processing device according to the invention will be described. However, these embodiments also apply for the apparatus for providing a functionality, for the method of processing data, for the computer-readable medium and for the program element.

The "generic data" may define the functionality of the apparatus in a language understandable by a human being. In contrast to this, such generic data may be incomprehensible for a machine like a computer. The generic data may be input in plaintext or clear text in a manner which is close to a human articulation. By structuring input fields of the receiving unit in order to enable a human user to input information in human language, but already pre-structured, it is possible to communicate with a human developer and to simultaneously cause the human developer to enter the data according to a given order. Thus, the receiving unit may allow a communication in general terms with the human being, but may set the course for a subsequent translation of the instructions into a machine language, similar like a form or a questionnaire.

Furthermore, the "formalized description" may define the functionality of the apparatus in a language interpretable, compilable or understandable by a machine. Thus, the data processing device may abstract and/or formalize the generic data to reformulate it in a machine-readable manner.

The data processing device according to the invention may comprise a third generation unit for generating, based on the formalized description, a user manual documenting the functionality of the apparatus. Such a manual can be generated automatically from the formalized description including all necessary information so that it may be dispensible that a detailed user manual has to be written manually by a human in a cumbersome manner. Furthermore, consistence between documentation and actually implemented functionality, reflected by the source code, may be achieved.

The third generation unit of the data processing device may be adapted to generate the user manual in a manner to be displayable and/or to be printable. Thus, the user manual may be displayed on a display device of a graphical user interface (GUI), for instance in the form of an HTML file comprising a plurality of linked pages. A user may use an input means like a computer mouse to click through the pages, or may electronically search the documentation file to rapidly find a subject of interest. The documentation may also be provided in a form that it can be printed as a hard copy using a printer device. For this purpose, it may be appropriate to generate the documentation as a PDF file or as a Word file.

The data processing device may comprise a receiving unit for receiving the generic data defining the functionality of the apparatus. The receiving unit may be a user interface via which a user may input the generic data. Particularly, such a receiving unit may include a Graphical User Interface (GUI) via which a human user may input data. Such a graphical user interface may include a display device (like a cathode ray tube, a liquid crystal display, a plasma display device or the like) for displaying information to a human operator, like masks in the form of Windows in which input fields may be provided. Such a graphical user interface may further comprise an input device allowing a user to input specification data or to provide the system with control commands. Such an input device may include a keypad, a joystick, a trackball, or may even include a microphone of a voice recognition system. The GUI may allow a human user to communicate with the system in a bidirectional manner.

Furthermore, the receiving unit may be adapted to receive the generic data defining a complete functionality of the apparatus. In other words, an entire, completingly defined functionality may be specified via the receiving unit so that a virtual development of a device is possible. The realization of the software for controlling such an apparatus may be generated in a computer-based manner from the input specification. Thus, an apparatus construction set may be provided according to an embodiment of the invention.

The receiving unit may be adapted to receive an entirety of all commands executable by the apparatus and/or an entirety of all actions performable by the apparatus. Such a command may allow a user of the apparatus to access or call a particular function which is intended to be carried out. An event may denote an action which may be performed automatically by the apparatus in the presence of a particular scenario.

The first generation unit of the data processing device may be adapted to generate, based on the generic data, an Extensible Markup Language file as the formalized description of the functionality of the apparatus. However, using an XML file is only an example for an appropriate formalized description language, any other suitable formalized description or programming language may be used as well.

The second generation unit may be adapted to generate source code readable by a parser of the apparatus. A parser may particularly denote a program or a physical entity which is capable to decide whether an input data set is compatible with the grammar of a particular language. Parsing may include a syntactic check of the input data set. Thus, the source code may be read by the parser of the apparatus.

The second generation unit may be adapted to generate the source code using a Stylesheet.

Furthermore, the second generation unit may be adapted to generate the source code in any appropriate program language, which may be object-oriented or not. Exemplary possible program languages are C, C++, C#, Pascal, Basic, Fortran, or Java.

The data processing device according to the invention may be adapted in such a manner that the apparatus to be designed may be at least one of the group of a measurement device for performing a measurement in a coupled or connected measurement environment, a sensor device, a test device for testing a device under test, a device for chemical, biological and/or pharmaceutical analysis, a fluid separation system adapted for separating components of a fluid, and a liquid chromatography device. However, these fields are only exemplary, and the development of any other apparatus realizing a specified functionality is possible as well.

Thus, the apparatus can be a measurement device which may perform any kind of measurement.

The apparatus can also be any kind of sensor sensing any physical, chemical or other parameter like temperature, humidity, pressure.

Further, the apparatus can be realized as a test device for testing a device under test (DUT). For testing electronic devices, in particular integrated electronic circuits providing digital electronic output signals, a test or stimulus signal may be fed to an input of the DUT, and a response signal of the DUT may be evaluated by an automatic test equipment, for example by comparison with expected data.

In a realization of the apparatus as a device for chemical, biological and/or pharmaceutical analysis, functions like (protein) purification, electrophoresis investigation of solutions, or chromatography investigations may be realized by the analysis device.

According to another exemplary embodiment of the present invention, the apparatus to be designed may be a fluid separation system adapted for separating compounds of a fluid. Such a fluid separation system may comprise a fluid delivering unit adapted for delivering fluid, a separation unit adapted for separating compounds of the fluid and to provide at least one separated component.

According to another exemplary embodiment of the invention, the data processing device may comprise a storage unit for storing the generic data (for instance received by the receiving unit), and may comprise a modification unit allowing to modify the generic data stored in the storage unit to modify the functionality of the apparatus. In other words, a set of generic data which has been input before (for instance in the frame of the development of another apparatus) can be reloaded in the user interface, and a selective modification of individual functions may be carried out. This may allow to generate source code and/or a user manual in a simple manner without the necessity to start developing the apparatus from the very beginning.

In the following, exemplary embodiments of the apparatus for providing a functionality will be described. However, these embodiments also apply for the data processing device, for the method of processing data, for the computer-readable medium and for the program element.

Particularly, the apparatus may comprise an interface via which the formalized description of the functionality of the apparatus is providable to an entity connected to the interface. Thus, the formalized description (for instance formulated in accordance with a particular industrial standard) may be stored within the apparatus and may be downloaded via the interface. This allows a user to get a fast overview of the entire functionality of an apparatus.

### BRIEF DESCRIPTION OF DRAWINGS

Objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a data processing device according to an exemplary embodiment of the invention.

Fig. 2 shows a schematic flow diagram illustrating a method of processing data according to an exemplary embodiment of the invention.

Fig. 3 shows an apparatus for providing a functionality according to an exemplary embodiment of the invention.

Fig. 4 to Fig. 11 show screenshots in accordance with a data processing device according to an exemplary embodiment of the invention.

The illustration in the drawing is schematically.

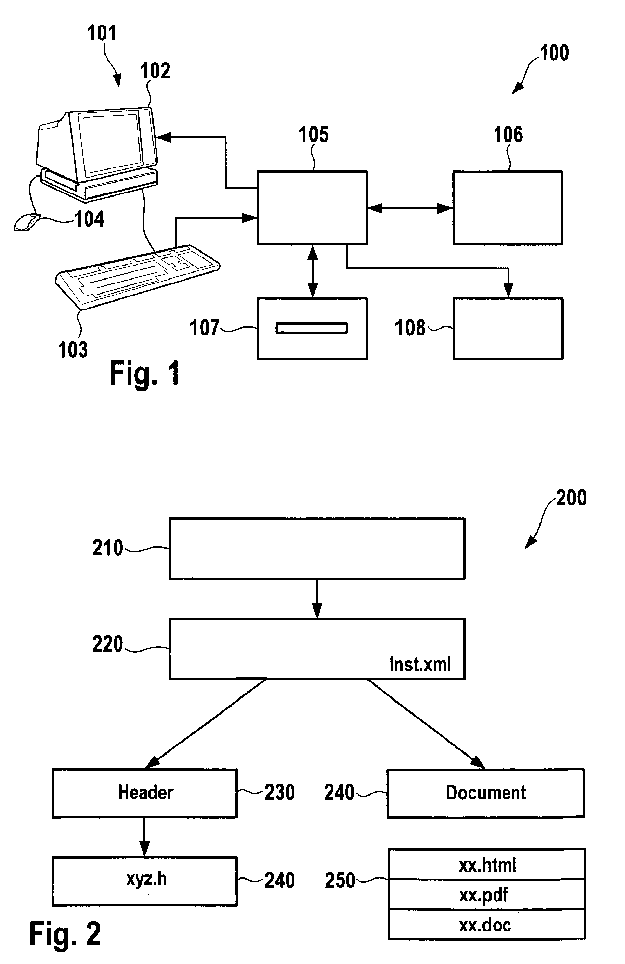

In the following, referring to **Fig. 1,** a data processing device 100 according to an exemplary embodiment of the invention will be described.

The data processing device 100 comprises a graphical user interface 101 including a monitor 102, a keypad 103 and a computer mouse 104. Via the graphical user interface 101, a human user may input generic data defining a functionality of a biochemical analysis device to be designed. For instance, a sequence of computer windows may be displayed on the monitor 102 which may include input fields allowing a user to input specification information concerning the biochemical analysis device to be developed, that is to say to input information relates to all commands which the biochemical analysis device shall understand, all actions which the biochemical analysis device shall be capable of carrying out, or the like.

The menu-based structure of the window architecture and the data input fields displayed on the monitor 102 allow a user to specify the functionality of the biochemical analysis device to be designed or realized in general terms and in a language of a human user. Particularly, the human user may be directed through a sequence of interconnected or linked windows to allow to enter the input data in the input data fields in an intuitive manner.

The data processing device 100 further comprises a central processing unit (CPU) 105 which receives the generic data entered via the graphical user interface 101 and which is capable for generating, based on the input generic data defining the functionality of the biochemical analysis device in general terms, a formalized description of the functionality of the biochemical analysis device in the form of an XML file. In other words, the data structure received by the GUI 101 is analyzed and processed by the CPU 105 to generate the XML file containing the formalized description of the entire functionality.

The plaintext data entered in the data input fields and the XML file can be stored in a storage unit 106. The storage unit can be any kind of storage unit, for instance a RAM memory, an EEPROM, a flash memory, an MRAM, an FRAM, an SRAM, or the like.

The CPU 105 can access the XML file stored in the storage unit 106. The CPU 105 is capable of generating, based on the XML file stored in the storage unit 106, source code for realizing the functionality of the biochemical analysis apparatus. For this purpose, the CPU 105 may also access program libraries which may also be stored on the storage device 106 and which may contain a collection of standard program routines.

The generated source code can be stored on a further storage device 107 which may be a harddisk or a removable storage cartridge, like a USB stick. Thus, on the storage device 107, the source code for controlling the apparatus to be designed is stored.

The CPU 105 may further generate, based on the XML file stored in the storage unit 106, a user manual file documenting the functionality of the apparatus. This user manual file may be stored on the further storage device 107 and/or may be sent to a printer 108 to generate a hardcopy of the user manual. The manual file can be stored for instance a HTML file, allowing a user to read the manual on the display device of a computer.

**Fig. 2** shows a flow diagram 200 illustrating a method of processing data according to an exemplary embodiment of the invention.

The diagram 200 shown in Fig. 2 schematically illustrates generic data 210 which may be input by a user in general terms/in a human language, for instance via the GUI 101 of Fig. 1.

The generic data 210 defining a functionality of the biochemical analysis device to be designed are translated automatically in a formalized description, that is to say into an XML file 220 denoted as Inst.xml.

This XML file 220 includes all information related to the functionality of the apparatus in accordance with the generic data or specification 210, however in a machine-readable format.

Using a Stylesheet, a file Header 230 is generated based on the XML file 220. The file Header 230 is a basis for source code 240 in C++ language, denoted as a file xyz.h. This source code may be used in the biochemical analysis device for providing or controlling its functionality.

Parallel to the generation of the source code 240, a Stylesheet may be used to generate a user documentation Document from the file Inst.xml. Particularly, documentation files 250 may be generated as a user manual in the form of an HTML file (xx.html), a PDF file (xx.pdf) and/or a Word file (xx.doc).

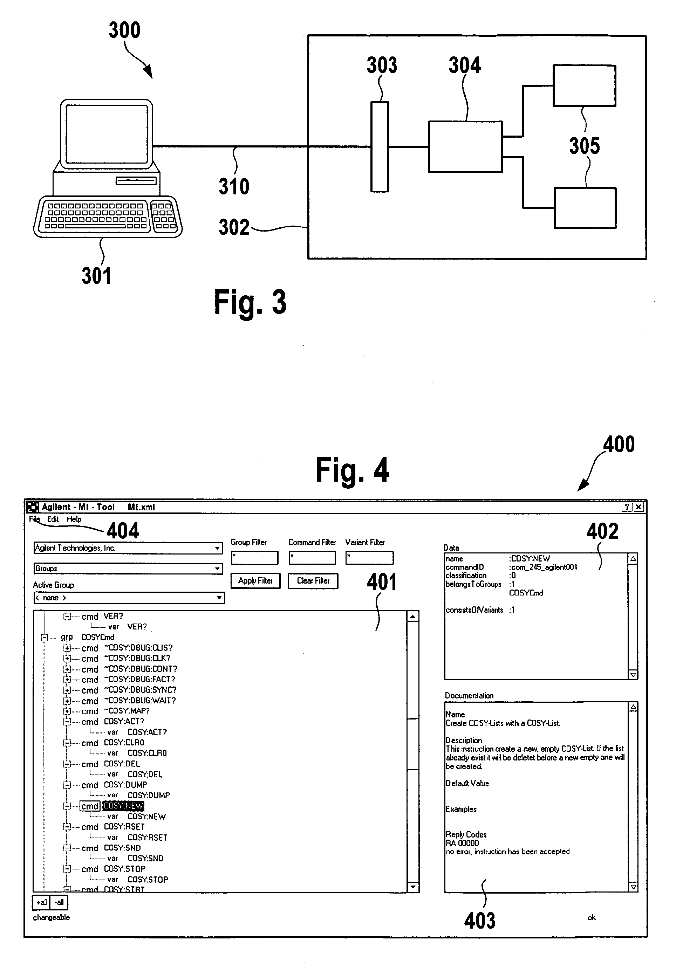

Fig. 3 shows an exemplary embodiment of a system 300 including a computer or workstation 301 and a biochemical analysis apparatus 302 developed in accordance with the invention.

The apparatus 302 comprises an interface 303 via which the computer 301 may communicate with the apparatus 302. Further, a parser 304 is provided in the apparatus 302 which is capable of interpreting or analyzing source code. The parser 304 may be coupled to a plurality of executing units 305 for particularly executing functions using compiled code. The communication between the computer 301 and the apparatus 302 may be realized via a network 310 which may be a LAN (Local Area Network).

An XML file (like Inst.xml, see Fig. 2) defining the entire functionality of the apparatus 302 can be stored in the apparatus 302. This XML file can be downloaded to the computer 301 coupled to the apparatus 302 via the interface 303. Thus, the computer 301 can get all necessary information related to the functions realizable by the apparatus 302.

In the following, referring to Fig. 4 to Fig. 11, screenshots of a Windows- based application according to an exemplary embodiment of the invention are shown, that is to say a user interface via which the functionality according to the invention may be carried out.

In the following, referring to Fig. 4, a screenshot 400 of a main window of a system according to an exemplary embodiment of the invention will be described.

The computer window 400 shows a user interface via which a human user may input a specification of a laboratory device to be developed (including all commands, answers and events which the laboratory device to be designed shall offer).

In a sub-window 401, a previously generated XML file is displayed which has been loaded into the memory of a computer on which the described application runs. This XML file includes all commands of an apparatus which has already been developed beforehand. Since the code in the first sub-window 401 is an XML code, it is difficult to read for a human user.

As can be seen in Fig. 4, a portion of the XML file denoted as COSY:NEW has been highlighted by a user (for instance using a computer mouse or the like) in the first sub-window 401. As a consequence of this action, a second sub-window 402 displays specification information concerning the command COSY:NEW. In a third sub-window 403, corresponding documentation information is included which explains the command COSY:NEW in clear text.

Each of the commands defined in the XML file shown in the first sub-window 401 can be displayed in clear text in the sub-windows 402, 403 to enable a human user to understand a particular functionality of interest, like COSY:NEW.

Although the screenshot 400 relates to an already existent apparatus, it is possible to change any of the data included in the sub-windows 402, 403 or the structure of the XML file in the window 401 to update or modify an already generated device, for instance to change a particular function of such a device.

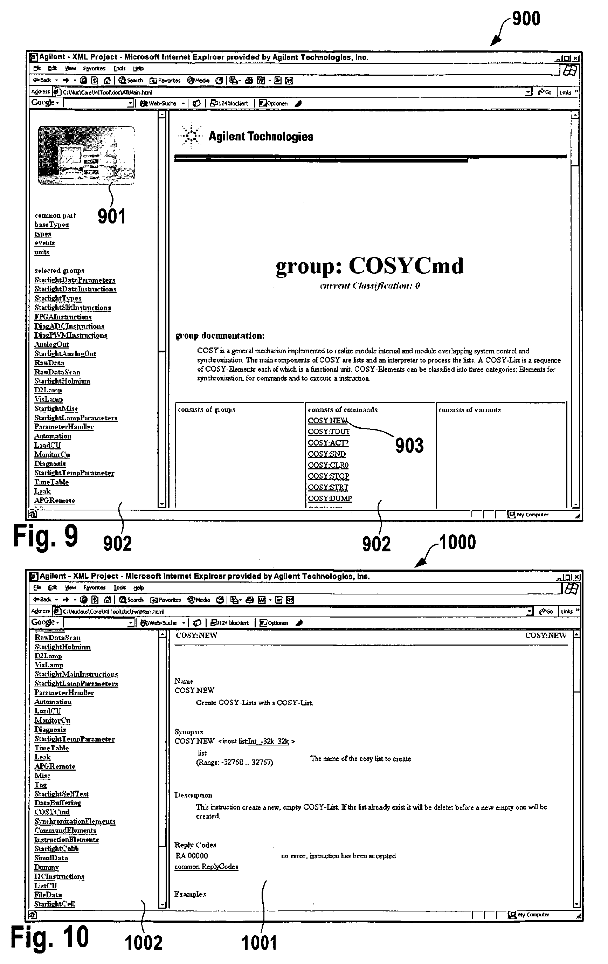

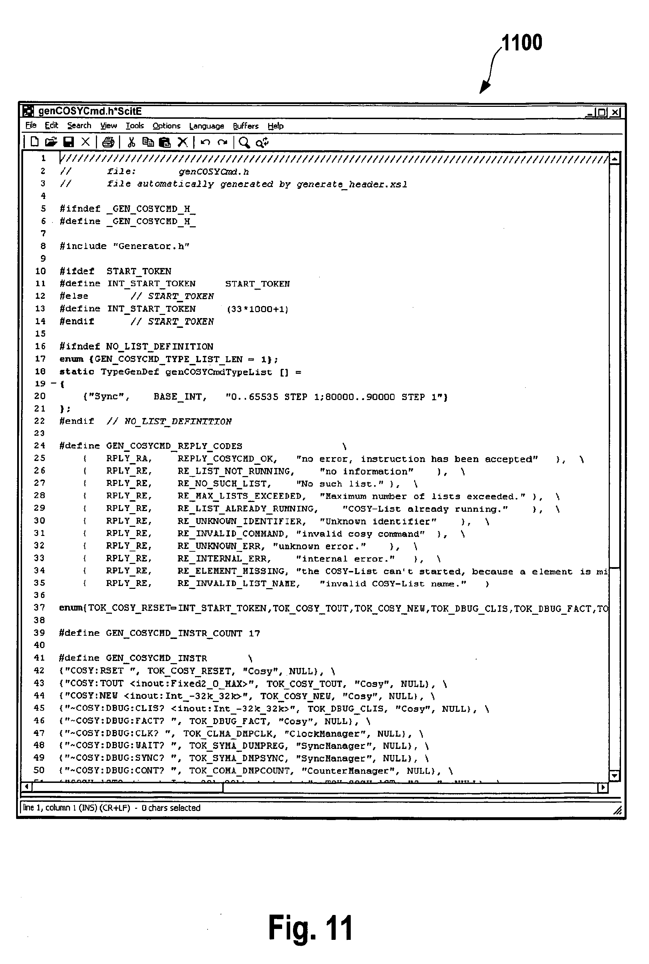

For generating source code and a user manual in accordance with the modified apparatus to be designed, after having input all modifications in the corresponding data fields (see explanation below), a menu list can be activated by clicking on selection field "File" 404 in the menu bar of Fig. 4. In the menu list which then becomes visible in the window 400, it is possible to press a "Generate" button to cause the software to automatically generate the source code and the user manual. When pressing this "Generate" button, firmware, that is to say source code defining the functionality of the modified apparatus (see Fig. 11), and a documentation(see Fig. 9, Fig. 10) may be generated.

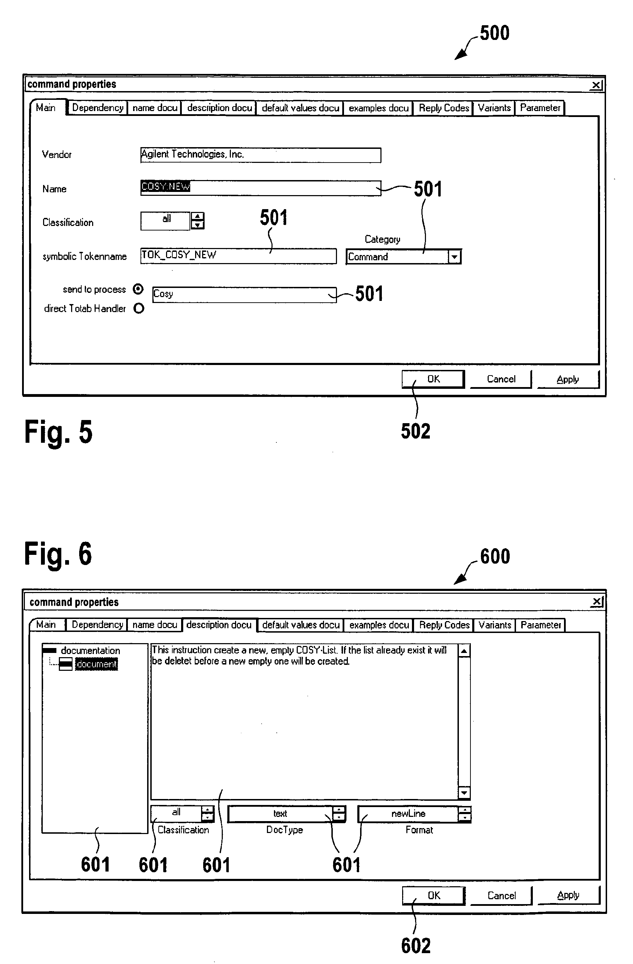

In the following, referring to Fig. 5 to Fig. 8, computer windows 500, 600, 700, 800 will be described allowing a user to input generic data for defining a functionality of an apparatus to be designed.

Referring to **Fig. 5,** in the computer window 500, a plurality of input fields 501 are provided allowing a user to define a detailed specification concerning the command COSY:NEW. After having modified the commands as desired by a user, an OK button 502 may be pressed so that the corresponding data are accepted.

Furthermore, via a sub-window description docu shown in the window 600 of **Fig. 6,** a documentation may be defined or modified via input fields 601. After having pressed an OK button 602, these documentation information will be included for subsequent processing.

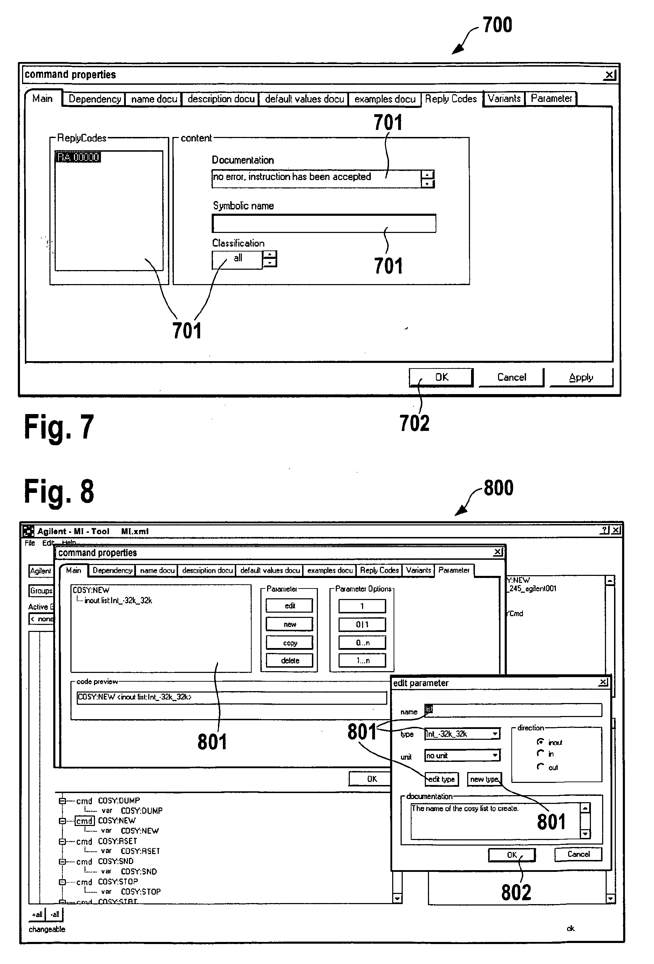

Referring to **Fig. 7,** a reply codes sub-window of a window 700 is shown. Via data fields 701, reply code information may be input and may be confirmed by pressing on an OK button 702.

**Fig. 8** shows a further dialog window 800 allowing to modify command parameters in various data input fields 801. After confirmation by pressing an OK button 802, these parameters related to particular commands are accepted.

After having entered all data relevant for the functionality of the apparatus to be designed in the data input fields shown in Fig. 4 to Fig. 8, a user may activate the above-described "Generate" button in the menu 404 shown in Fig. 4. Consequently, the XML file shown in the sub-window 401 is updated, or a completely new XML file is generated reflecting the entire defined functionality as a formalized description.

Such an XML file can be stored and may be, for instance, provided at an interface of the physical apparatus to be designed so that any user can access this XML code describing the whole functionality in formalized description.

However, by pressing the "Generate" button as described above, the software generates automatically a documentation as an HTML file, as shown in Fig. 9 and Fig. 10. The information needed for generating this documentation originates from the XML file.

**Fig. 9** shows a communication window 900 documenting the functionality of the apparatus which has been designed. Different communication sub-windows 902 are shown including links to other pages which include further detailed information concerning the various aspects mentioned as headlines in the windows 902.

For instance, by pressing a COSY:NEW button 903, a window 1000 as shown in **Fig. 10** will pop up. In this window 1000, a HTML user manual related to the command COSY:NEW is shown in a sub-window 1001. Another sub-window 1002 allows to access information concerning other commands.

However, by pressing the "Generate" button as described above, not only the documentation shown in Fig. 9 and Fig. 10 is generated. Furthermore, C++ source code is automatically generated which may be used to control the apparatus 901. Such source code is shown in a window 1100 of **Fig. 11**. The C++ code included in the window 1100 may be denoted as firmware code containing all information concerning the apparatus 901 in a machine-readable form. This firmware can be implemented in the apparatus for controlling the same.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A data processing device (100), comprising
a first generation unit (105) for generating, based on generic data defining a functional interface of an apparatus in general terms, a formalized description of the functional interface of the apparatus;
a second generation unit (105) for generating, based on the formalized description, source code for realizing the functional interface of the apparatus.

2. The data processing device (100) of claim 1, comprising at least one of the features:
the generic data defines the functional interface of the apparatus in a language which is understandable for a human being;
the formalized description defines the functional interface of the apparatus in a language which is interpretable, compilable or understandable by a machine.

3. The data processing device (100) of claim 1 or any one of the above claims, comprising at least one of the features:
a third generation unit (105) for generating, based on the formalized description, a user manual documenting the functional interface of the apparatus;
a third generation unit (105) for generating, based on the formalized description, a user manual documenting the functional interface of the apparatus, wherein the third generation unit (105) is adapted to generate the user manual in a mannerto be displayable and/or to be printable.

4. The data processing device (100) of claim 1 or any one of the above claims,
comprising a receiving unit (102 to 104) for receiving the generic data defining the functional interface of the apparatus.

5. The data processing device (100) of claim 4, comprising at least one of the features:
the receiving unit (102 to 104) is a user interface adapted to receive the generic data input by a user;
the receiving unit (102 to 104) is adapted to receive generic data defining a complete functional interface of the apparatus;
the receiving unit (102 to 104) is adapted to receive an entirety of all commands executable by the apparatus and/or an entirety of all actions performable by the apparatus.

6. The data processing device (100) of claim 1 or any one of the above claims, comprising at least one of the features:
the first generation unit (105) is adapted to generate, based on the generic data, the formalized description of the functional interface of the apparatus in Extensible Markup Language;
the second generation unit (105) is adapted to generate the source code in a form which is readable by a parser of the apparatus;
the second generation unit (105) is adapted to generate the source code using a Stylesheet;
the second generation unit (105) is adapted to generate the source code in C, C++, C#, Pascal, Basic, Fortran, or Java;
the data processing device (100) is adapted to design the apparatus as at least one of a measurement device for performing a measurement in a coupled measurement environment, a sensor device, a test device for testing a device under test, a device for chemical, biological and/or pharmaceutical analysis, a fluid separation system adapted for separating compounds of a fluid, and a liquid chromatography device.

7. The data processing device (100) of claim 1 or any one of the above claims, comprising:
a storage unit (106) for storing the generic data; and
a modification unit (102 to 105) for modifying the generic data stored in the storage unit (106) to modify the functional interface of the apparatus.

8. An apparatus (302) for providing a functional interface, the apparatus (302) comprising
a formalized description of the functional interface, wherein the formalized description is generated based on generic data defining the functional interface of the apparatus (302) in general terms.

9. The apparatus (302) of claim 8, comprising at least one of the features:
an interface (303) via which the formalized description of the functional interface of the apparatus (302) is providable to an entity (301) coupled to the interface (303);
the apparatus (302) is adapted as at least one of a measurement device for performing a measurement in a coupled measurement environment, a sensor device, a test device for testing a device under test, a device for chemical, biological and/or pharmaceutical analysis, a fluid separation system adapted for separating compounds of a fluid, and a liquid chromatography device.

10. A method of processing data, the method comprising the steps of
generating, based on generic data defining a functional interface of an apparatus in general terms, a formalized description of the functional interface of the apparatus;
generating, based on the formalized description, source code for realizing the functional interface of the apparatus.

11. A computer-readable medium, in which a computer program of processing data is stored, or a program element of processing data, which computer program or program element, when being executed by a processor (105), is adapted to control or carry out the method steps of
generating, based on generic data defining a functional interface of an apparatus in general terms, a formalized description of the functional interface of the apparatus;
generating, based on the formalized description, source code for realizing the functional interface of the apparatus.
